# EUROPEAN PATENT APPLICATION

(11) **EP 3 926 573 A1**
(43) Date of publication of application: **22.12.2021**
(21) Application number: 19940593.7
(22) Date of filing: 07.08.2019
(51) Int. Cl.: G06Q 50/30, G06Q 50/14, G06Q 30/06

(54) **ELECTRIC KICKBOARD RENTAL SYSTEM LINKED WITH TOURISM**

(30) Priority: 06.08.2019 KR 20190095424
(71) Applicant: EV Pass Co., Ltd., Jeju-si, Jeju-do 63309 (KR)
(72) Inventor: HYUN, Seung Bo, Jeju-si Jeju-do 63152 (KR); YANG, Hae Yong, Suwon-si Gyeonggi-do 16293 (KR); KIM, Yeon Tae, Jeju-si Jeju-do 63145 (KR); SONG, Hye Jin, Jeju-si Jeju-do 63145 (KR)
(74) Representative: González López-Menchero, Álvaro Luis
(86) International application number: PCT/KR2019/009851
(87) International publication number: WO 2021/025200

(57) **Abstract**

The present invention relates to a tourism-associated electric kick scooter rental system and, more particularly, to a tourism-associated electric kick scooter rental system in which a tourism product and a product for leasing an electric kick scooter are associated. With the use of the system, many advantages can be obtained. That is, an associated business operator can easily sell the tourism product. Since the associated business operator has to lease the electric kick scooter in order to sell the tourism product, an administrator can easily get a business operator that will use the system. In addition, various products in which the tourism product and the leasing of the electric kick scooter are associated can be offered. In addition, the associated business operator and the administrator can easily secure customers and thus the cost of a product can be lowered. In addition, a user can use the product at a low price.

## Description

### Technical Field

The present invention relates to a tourism-associated electric kick scooter rental system and, more particularly, to a tourism-associated electric kick scooter rental system in which a tourism product and a product for renting an electric kick scooter are associated, the system having advantages in that: an associated business operator can easily sell the tourism product through the system; since the associated business operator has to lease the electric kick scooter in order to sell the tourism product, an administrator can easily get a business operator that will use the system; various products in which the tourism product and the renting of the electric kick scooter are associated can be offered through the system; the associated business operator and the administrator can easily secure customers and thus the cost of a product can be lowered; and a user can use the product at a low price.

### Background Art

An electric kick scooter that is driven automatically using an electric motor has been widely used as a means for leisure activity or a means for transportation.

Particularly, in recent years, electric kick scooter sharing systems, as disclosed in Patent Document 1, have rapidly gained popularity. In an electric kick scooter sharing system, a user is authenticated through a QR code or the like, a payment for use of an electric kick scooter for a fixed time is made through a Smartphone or the like, and the electric kick scooter is rented and returned anywhere regardless of location.

### (Patent Document)

Korean Patent No. 10-1980155 (registered on May 14, 2019) titled "ELECTRIC KICK SCOOTER RENTAL SHARING SYSTEM"

However, in an electric kick scooter sharing system in the related art, focus is placed on payment of a fee for use of the electric kick scooter. Therefore, there is a problem that electric kick scooters are difficult to manage. Therefore, although the use of the electric kick scooter in a specific location in a tourist attraction site or the like provides fun and convenience, in a case where the electric kick scooter sharing system in the related art is used, there is a problem that the use of the electric kick scooter cannot be actively used.

### Disclosure

### Technical Problem

The present invention has been made to solve the problems described above.

An objective of the present invention is to provide a tourism-associated electric kick scooter rental system in which a tourism product and a product for renting an electric kick scooter are associated, the system having advantages: an associated business operator can easily sell the tourism product; since the associated business operator has to lease the electric kick scooter to sell the tourism product, an administrator can easily get a business operator that will use the system; various products in which the tourism product and the renting of the electric kick scooter are associated can be offered through the system; the associated business operator and the administrator can easily secure customers and thus the cost of a product (service) can be lowered; and a user can use the products at a low price.

Another objective of the present invention is to provide a tourism-associated electric kick scooter rental system through which an unlimited pass can be used, the unlimited pass permitting an electric kick scooter to be continually used any number of times for a fixed time in a manner that is associated or unassociated with a tourism product. Thus, customers can be continually secured.

Still another objective of the present invention is to provide a tourism-associated electric kick scooter rental system which offers a rental car product configured such that a car is rented, an electric kick scooter loaded in the rented car is used, and the rented car is returned with the electric kick scooter loaded in the rented car after the electric kick scooter is used. This product provides a synergy effect of car rental and electric kick scooter rental.

Still another objective of the present invention is to provide a tourism-associated electric kick scooter rental system in which: in a case where a user desires to receive an electric kick scooter in a place that is not an agency, multiple main business operators are alerted to the information, rather than requesting a main business operator having an agency located closest to the place to transfer the electric kick scooter, and the electric kick scooter is transferred by a main business operator that desires to transfer the electric kick scooter; the electric kick scooter is smoothly transferred in a manner that is suitable for a situation of the main business operator; a main business operator that outputs earliest the information indicating that the electric kick scooter can be transferred to the user is permitted to transfer the electric kick scooter to the user; and in this manner, a competition system is introduced and the use of the system is thus encouraged.

Still another objective of the present invention is to provide a tourism-associated electric kick scooter rental system in which: a package product for sightseeing a tourist attraction site while riding on an electric kick scooter is offered; and the use of an electric kick scooter tour for a foreigner is encouraged.

Still another objective of the present invention is to provide a tourism-associated electric kick scooter rental system in which: road information indicating a course in a specific tourist attraction site, along which a user can enjoy sightseeing while riding on an electric kick scooter, is provided; and the use of the electric kick scooter is encouraged in the tourist attraction site.

### Technical Solution

In order to accomplish the objects described above, the present invention is realized by embodiments having the following configurations.

According to an embodiment of the present invention, there is provided a tourism-associated electric kick scooter rental system including: a user terminal; and a management server that exchanges information with the user terminal and serves to make a contract for leasing an electric kick scooter, in which the management server includes a contract unit having an association module. The association module checks information that is output from the user terminal and serves to make the contract for leasing the electric kick scooter in a manner that is associated with a tourism product.

According to another embodiment of the present invention, in the tourism-associated electric kick scooter rental system, the association mode may include a car rental selection module that serves to select a rental car product in which a car is rented, the electric kick scooter loaded in the rented car is used, and the rented car is returned with the electric kick scooter loaded in the rented car after the electric kick scooter is used.

According to still another embodiment of the present invention, in the tourism-associated electric kick scooter rental system, the contract unit may further include: an exclusive unlimited pass module that serves to make a contract for purchasing an exclusive unlimited pass that permits the electric kick scooter to be continually used any number of times for a fixed duration in a manner that is unassociated with the tourism product; and an associated unlimited pass module that serves to make a contract for purchasing a preset associated unlimited pass that permits both of a specific tourism product and the electric kick scooter to be used for a fixed duration.

According to still another embodiment of the present invention, in the tourism-associated electric kick scooter rental system, the management server may further include a tour contract unit that checks information that is output from the user terminal of a foreign tourist and serves to make a contract for an electric kick scooter tour, in which the electric kick scooter tour may mean a tourism package product for sightseeing a tourist attraction site while riding on the electric kick scooter.

According to still another embodiment of the present invention, in the tourism-associated electric kick scooter rental system, the contract unit may further include a non-association module that checks information that is output from the user terminal and serves to make a contract for leasing the electric kick scooter in a manner that is unassociated with the tourism product. The non-association module may include a use-related information selection module that serves to output information on a product for leasing the electric kick scooter, which is unassociated with the tourism product, to the user terminal and serves to enable a user to make a selection from among detailed items relating to the product for leasing the electric kick scooter, which is unassociated with the tourism product. In a case where a signal that requests information on the product for leasing the electric kick scooter, which is unassociated with the tourism product, is output from the user terminal, the use-related information selection module may include a leasing place module and a returning place module. The leasing place module serves to transfer information on a place for receiving the electric kick scooter, which is selectable by a user, to the user terminal, and serves to enable the user to select the place for receiving the electric kick scooter. The returning place module serves to transfer information on a place for returning the electric kick scooter, which is selectable by the user, to the user terminal, and serves to enable the user to select the place for returning the electric kick scooter after using the electric kick scooter. The place for receiving the electric kick scooter may be an agency of a main business operator or any other arbitrary place that is selected by the user.

According to still another embodiment of the present invention, in the tourism-associated electric kick scooter rental system, the management server may further include a kick scooter request unit. The kick scooter request unit may include a reception place checking module and a transfer request module. When the information indicating that the electric kick scooter is transferred at the specific arbitrary place at the specific date is output in multiple business operator terminals within the fixed time, the transfer request module may select a business operator that owns the business operator terminal in which the information is output earliest, as the transfer business operator. The kick scooter request unit serves to exchange information with a business operator terminal of the main business operator and serves to transfer the electric kick scooter to an arbitrary place, in a case where information indicating that the electric kick scooter is received in the arbitrary place, as the place for receiving the electric kick scooter, instead of the agency of the main business operator, is included the detail of the contract for leasing electric kick scooter, which is made through the non-association module. The reception place checking module checks whether or not the information indicating that the electric kick scooter is received in the arbitrary place, as the place for receiving the electric kick scooter, instead of the agency of the main business operator, is included in the detail of the contract for leasing the electric kick scooter, which is made through the non-association module. In a case where the reception place checking module checks that the information indicating that the electric kick scooter is received in the arbitrary place, as the place for receiving the electric kick scooter, instead of the agency of the main business operator, is included, the transfer request module outputs information requesting that the electric kick scooter is transferred to a specific arbitrary place at a specific date, to business operator terminals of multiple main business operators. In a case where information indicating that the electric kick scooter is transferred to the specific arbitrary place at the specific date is output in the business operator terminal within a fixed time, the transfer request module selects an operator that owns the business operator terminal in which the information is output, as a transfer business operator.

According to still another embodiment of the present invention, in the tourism-associated electric kick scooter rental system, the kick scooter request unit may further include a transfer requirement module that identifies a main business operator that owns an agency that is located closest to the arbitrary place, and selects the main business operator, in a case where the information indicating that the electric kick scooter is transferred to the specific arbitrary place at the specific date is not output in the business operator terminal within the fixed time, although the transfer request module outputs the information requesting that the electric kick scooter is transferred to the specific arbitrary place at the specific date, to the business operator terminals of the multiple main business operators.

According to still another embodiment of the present invention, in the tourism-associated electric kick scooter rental system, the management server may further include a return processing unit that serves to exchange information with a business operator terminal and a management terminal and serves to enable the electric kick scooter, which is positioned in the arbitrary place, to be picked up, in a case where information indicating that the electric kick scooter is returned to an arbitrary place, as a place for returning the electric kick scooter, that is selected by the user, instead of the agency of the main business operator and a place where an associated business operator provides the tourism product, is included in the detail of the contract for leasing the electric kick scooter, which is made through the contract unit. The return processing unit may include a returning place checking module, a business operator providing module, and an administrator providing module. The returning place module determines whether the contract for the electric kick scooter is made through the non-association module or the association module, in a case where the information indicating that the electric kick scooter is returned to the arbitrary place, as the place for returning the electric kick scooter, instead of the agency of the main business operator and the place where the associated business operator provides the tourism product, is included in the detail of the contract for leasing the electric kick scooter, which is made through the contract unit. The business operator providing module may output information indicating that the electric kick scooter is picked up in a specific place at a specific date, in the business operator terminal of the main business operator that owns the electric kick scooter that is a target for the contract, in a case where the returning place checking module determines that the contract for the electric kick scooter is made through the non-association module. The administrator providing module may output information indicating that the electric kick scooter is picked up in a specific place at a specific date and is then transferred to a specific associated business operator, in the administrator terminal, in a case where the returning place checking module determines that the contract for the electric kick scooter is made through the association module.

### Advantageous Effects

According to the present invention, the following advantages are obtained with the embodiments described above, and configurations, combinations, and relationships in use that will be described below.

According to the present invention, a tourism product and a product for leasing an electric kick scooter are associated with each other and thus it is possible that an associated business operator easily sells the tourism product using the present system. In order to sell the tourism product using the present system, the associated business operator has to rent the electric kick scooter. Therefore, an administrator can easily get a business operator that uses the present system and various products in which the tourism product and the leasing of the electric kick scooter are associated are provided through the present system. As a result, there is an advantage in that the associated business operator and the administrator can easily secure customers and thus the cost of a product (service) can be lowered and in that a user can thus make a selection from among various products and can use a product at a low price.

In addition, according to the present invention, a unlimited pass that permits an electric kick scooter to be continually used any number of times for a fixed time in a manner that is associated or unassociated with a tourism product is introduced. As a result, there is an advantage in that customers are continually secured.

In addition, according to the present invention, a product configured such that a car is rented, an electric kick scooter loaded in the rented car is used, and the rented car is returned with the electric kick scooter loaded in the rented car after the electric kick scooter is used can be sold. As a result, there is an advantage in that a synergy effect of car rental and electric kick scooter rental is achieved.

In addition, according to the present invention, in a case where a user desires to receive an electric kick scooter in a place, instead of the agency, multiple main business operators are alerted to the information, rather than requesting a main business operator having an agency located closest to the place to transfer the electric kick scooter to the user, and the electric kick scooter is transferred by a main business operator that desires to transfer the electric kick scooter to the user. Thus, the electric kick scooter is smoothly transferred in a manner that is suitable for a situation of the main business operator, and a main business operator that outputs earliest the information indicating that the electric kick scooter can be transferred is permitted to transfer the electric kick scooter to the user. As a result, there is an advantage in that a competition system is introduced and in that the use of the system is thus encouraged actively.

In addition, according to the present invention, a tourism package product for sightseeing a tourist attraction site while riding on an electric kick scooter is introduced. As a result, there is an advantage in that the use of the electric kick scooter is encouraged actively.

In addition, according to the present invention, road information indicating a course in a specific tourist attraction site can be provided so that a user can enjoy sightseeing along the course while riding on an electric kick scooter. As a result, there is an advantage in that the use of the electric kick scooter is encouraged actively.

### Description of Drawings

FIG. 1 is a block diagram illustrating a tourism-associated electric kick scooter rental system according to an embodiment of the present invention;
FIG. 2 is a block diagram illustrating a detailed configuration of a management server in FIG. 1;
FIG. 3 is a block diagram illustrating a detailed configuration of a business operator contract unit in FIG. 2;
FIG. 4 is a block diagram illustrating a detailed configuration of a contract unit in FIG. 2;
FIG. 5 is a block diagram illustrating a detailed configuration of a use-related information selection module in FIG. 4;
FIG. 6 is a block diagram illustrating a detailed configuration of a rental contract completion module in FIG. 4;
FIG. 7 is a block diagram illustrating a detailed configuration of an associated product selection module in FIG. 4;
FIG. 8 is a block diagram illustrating a detailed configuration of a product contract completion module in FIG. 4;
FIG. 9 is a block diagram illustrating a detail configuration of a kick scooter request unit in FIG. 2; and
FIG. 10 is a block diagram illustrating a detailed configuration of a return processing unit in FIG. 2.

### Description of the Reference Numerals in the Drawings

- 1:: management server
- 11:: transmission and reception unit
- 12:: business operator contract unit
- 13:: tourism road information unit
- 14:: contract unit
- 15:: kick scooter request unit
- 16:: return processing unit
- 17:: tour contract unit
- 18:: storage uni
- 19:: control unit
- 121:: non-associated contract module
- 122:: associated contract module
- 141:: non-association module
- 142:: association module
- 143:: unlimited pass module
- 151:: reception place checking module
- 152:: transfer request module
- 153:: transfer requirement module
- 161:: returning place checking module
- 162:: business operator providing module
- 163:: administrator providing module
- 141a:: use-related information request module
- 141b:: use-related information selection module
- 141c:: rental contract completion module
- 142a:: associated product request module
- 142b:: associated product selection module
- 142c:: product contract completion module
- 143a:: exclusive unlimited pass module
- 143b:: associated unlimited pass module
- 1411:: type module
- 1412:: leasing place module
- 1413:: returning place module
- 1414:: duration module
- 1415:: fee calculation module
- 1416:: contract storage module
- 1417:: contract transfer module
- 1421:: tourism product selection module
- 1422:: kick scooter product selection module
- 1423:: fee calculation module
- 1424:: information storage module
- 1425:: information transfer module
- 1421a:: car rental selection module
- 1421b:: lodging house selection module
- 1421c:: restaurant selection module

### Best Mode

A tourism-associated electric kick scooter rental system according to the present invention will be described in detail below with reference to the accompanying drawings. In describing embodiments of the present disclosure, well-known functions or constructions will not be described in detail when it is determined that they may obscure the spirit of the present disclosure. It will be further understood that when a component "comprises" or "has" another component, it means that the component may further include another component, not excluding another component unless explicitly stated otherwise. Unless explicitly described otherwise, the terms "unit", "module", and the like, which are described through the specification, mean an individual component that performs at least one function or operation and may be realized in hardware, in software, or both in hardware and in software.

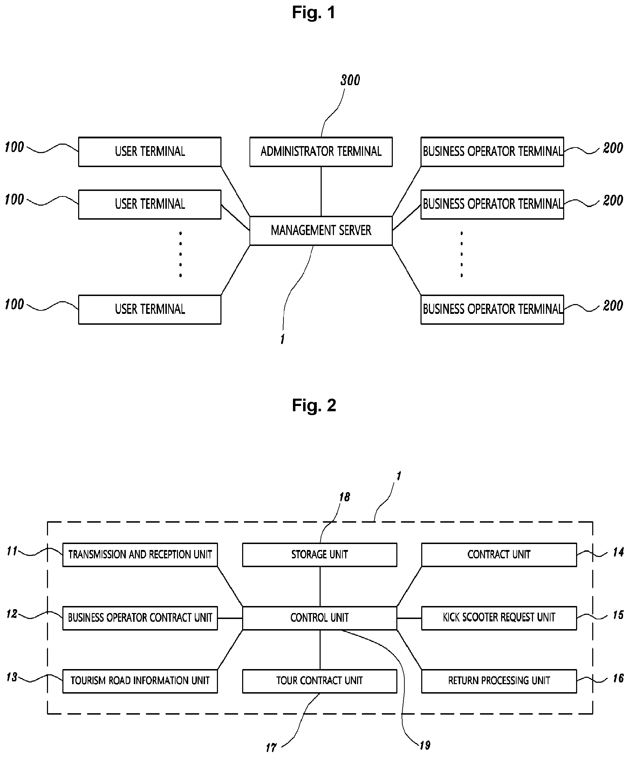

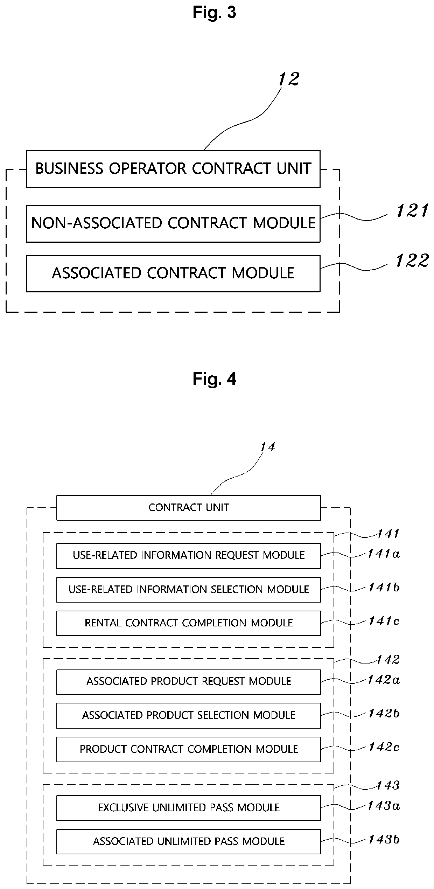

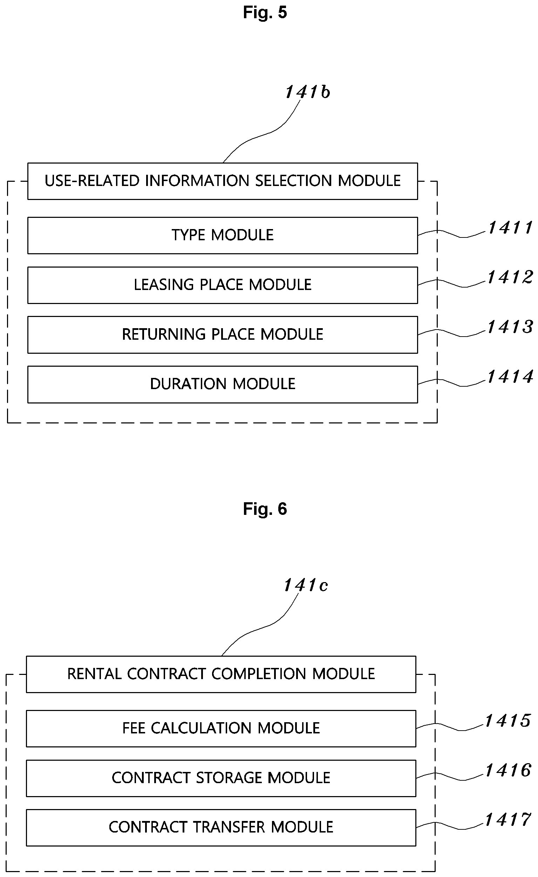

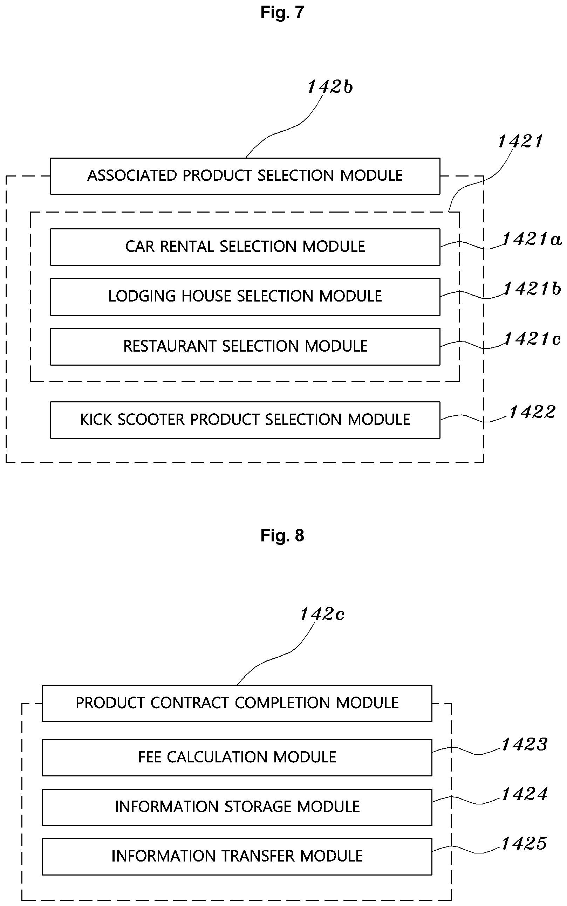

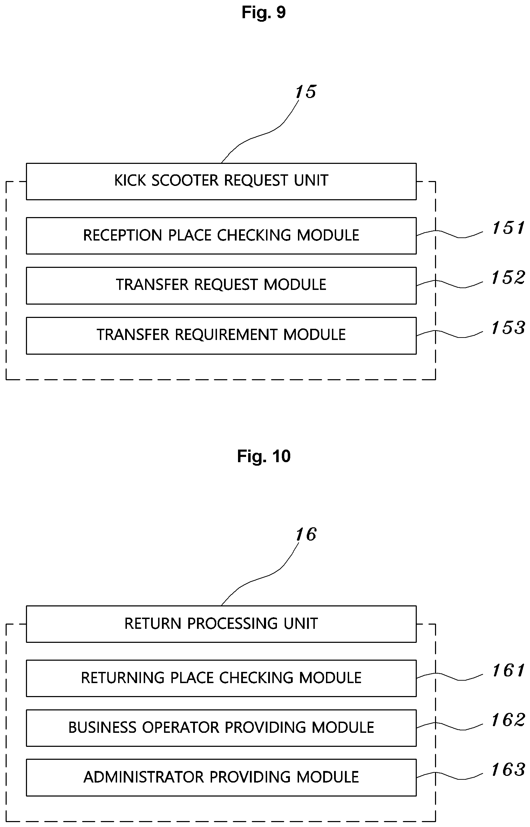

FIG. 1 is a block diagram illustrating a tourism-associated electric kick scooter rental system according to an embodiment of the present invention. FIG. 2 is a block diagram illustrating a detailed configuration of a management server in FIG. 1. FIG. 3 is a block diagram illustrating a detailed configuration of a business operator contract unit in FIG. 2. FIG. 4 is a block diagram illustrating a detailed configuration of a contract unit in FIG. 2. FIG. 5 is a block diagram illustrating a detailed configuration of a use-related information selection module in FIG. 4. FIG. 6 is a block diagram illustrating a detailed configuration of a rental contract completion module in FIG. 4. FIG. 7 is a block diagram illustrating a detailed configuration of an associated product selection module in FIG. 4. FIG. 8 is a block diagram illustrating a detailed configuration of a product contract completion module in FIG. 4. FIG. 9 is a block diagram illustrating a detail configuration of a kick scooter request unit in FIG. 2. FIG. 10 is a block diagram illustrating a detailed configuration of a return processing unit in FIG. 2.

The tourism-associated electric kick scooter rental system according to the embodiment of the present invention is described with reference to FIGS. 1 to 10. The tourism-associated electric kick scooter rental system includes a user terminal 100, a business operator terminal 200, an administrator terminal 300, a management server 1, and the like.

The user terminal 100 is configured to be used by a user who wants to rent an electric kick scooter using the tourism-associated electric kick scooter rental system in order to exchange information with the management server 1. An electronic device, such as, a PC, a Smartphone, or a tablet PC, that exchanges information over the Internet and stores information is used as the user terminal 100. The exchange of information through the user terminal 100 is performed by an application (hereinafter referred to as "information processing application") that is stored in the user terminal 100 and serves to exchange information with the management server 1, or is performed by having access to a home page that is managed by the management server 1, through the user terminal 100. The business operator terminal 200 is configured to be used by a business operator that is engaged in the business of leasing the electric kick scooter using the tourism-associated electric kick scooter rental system in order to exchange information with the management server 1. The administrator terminal 300 is configured to be used by an administrator of the tourism-associated electric kick scooter rental system in order to exchange information with the management server 1. An electronic device, such as, a PC, a Smartphone, or a tablet PC, that exchanges information over the Internet and stores information is used as the business operator terminal 200 and the administrator terminal 300. The business operator terminal 200 includes a first business operator terminal (not illustrated) that is used by a main business operator that is engaged in the business of leasing the electric kick scooter in a manner that is unassociated with a tourism product, and a second business operator terminal (not illustrated) that is used by an associated business operator that is engaged in the business of leasing the electric kick scooter in a manner that is associated with the tourism product. The tourism product means a business product for providing various goods or services relating to tourism. Examples of the tourism product include leasing a car, using a cafeteria, using a restaurant, using a lodging house, visiting a village for sighting, and so on. The leasing of the electric kick scooter in a manner that is associated with the tourism product means that the tourism product has to be used in order to rent the electric kick scooter. Examples of this include associating the electric kick scooter with the use of a rented car (a tourism product) in a tourist attraction site, associating the electric kick scooter with the use of a cafeteria (a tourism product) in a tourist attraction site, associating the electric kick scooter with the use of a lodging house (a tourism product) in a tourist attraction site, and so on.

The management server 1 is configured in such a manner that the management server 1 exchanges information with the user terminal 100, the business operator terminal 200, the administrator terminal 300, and the like and that electric kick scooters are thus lent and managed. The management server 1 includes a transmission and reception unit 11, a business operator contract unit 12, a tourism road information unit 13, a contract unit 14, a kick scooter request unit 15, a return processing unit 16, a tour contract unit 17, a storage unit 18, a control unit 19, and the like.

The transmission and reception unit 11 exchanges information with the user terminal 100, the business operator terminal 200, the administrator terminal 300, and the like. The business operator contract unit 12 is configured in such a manner that, in a case where contract information indicating that a contract for use of the tourism-associated electric kick scooter rental system is made with a business operator is output from the administrator terminal 300, the contract information is stored in the storage unit 18. The business operator contract unit 12 includes a non-associated contract module 121, an associated contract module 122, and the like.

The non-associated contract module 121 is configured in such a manner that, in a case where contract information indicating that the contract for the use of the tourism-associated electric kick scooter rental system is made with the main business operator that is engaged in the business of leasing the electric kick scooter in a manner that is unassociated with the tourism product is output from the administrator terminal 300, the contract information is stored in the storage unit 18. The main business operator is a separate agency or a business operator that retains a moving apparatus (a vehicle that carries the electric kick scooters) that carries the electric kick scooters and is engaged in the business of leasing the electric kick scooter in a manner that is unassociated with a tourism product. By making a contract for the use of the tourism-associated electric kick scooter rental system, the main business operator can make an online contract with a user for leasing the electric kick scooter, using the system described above. The contract contains a provision stipulating that the electric kick scooter should be obligatorily lent at the request of an administrator in a place other than the agency.

The associated contract module 122 is configured in such a manner that, in a case where contract information indicating that the contract for the use of the tourism-associated electric kick scooter rental system is made with the associated business operator that is engaged in the business of leasing the electric kick scooter in a manner that is associated with a tourism product is output from the administrator terminal 300, the contract information is stored in the storage unit 18. The contract information includes tourism product information associated with the leasing of the electric kick scooter. The associated business operator is a separate agency or a business operator that purchases or rents electric kick scooters from the administrator and stores a small quantity of electric kick scooters in a place where the associated business operator provides a tourism product, without retaining the moving apparatus that carries electric kick scooters, and rents the electric kick scooter in a manner that is associated with a tourism product that the associated business operator itself sells. By making the contract for the use of the tourism-associated electric kick scooter rental system, the associated business operator can make an online contract with a user for a tourism product, which includes a contract for leasing the electric kick scooter, using the system described above.

The tourism road information unit 13 is configured in such a manner that road information stored in the storage unit 18, which indicates a course in a specific tourist attraction site, along which a user can enjoy sightseeing while riding on the electric kick scooter, is displayed on the user terminal 100.

The contract unit 14 is configured in such a manner that information that is output from the user terminal 100 is checked and that the contract for leasing the electric kick scooter is then made. The contract unit 14 includes a non-association module 141, an association module 142, an unlimited pass module 143, and the like.

The non-association module 141 is configured in such a manner that the information that is output from the user terminal 100 is checked and that a contract for leasing the electric kick scooter is then made in a manner that is unassociated with a tourism product. The non-association module 141 includes a use-related information request module 141a, a use-related information selection module 141b, a rental contract completion module 141c, and the like.

The use-related information request module 141a is configured in such a manner that it is checked whether or not a signal that requests information on a product for leasing an electric kick scooter, which is unassociated with a tourism product, is output in the user terminal 100.

The use-related information selection module 141b is configured in such a manner that, in a case where the use-related information request module 141a checks that the signal that requests the information on the product for leasing an electric kick scooter, which is unassociated with a tourism product, is output from the user terminal 100, the information on the product for leasing an electric kick scooter, which is unassociated with a tourism product, is output to the user terminal 100 and that the user can thus make a selection from among detailed items relating to the product. The use-related information selection module 141b includes a type module 1411, a leasing place module 1412, a returning place module 1413, a duration module 1414, and the like.

The type module 1411 is configured in such a manner that pieces of information on types of electric kick scooters that are selectable by the user are transferred to the user terminal 100 and that the user can thus select a type of electric kick scooter that he/she desires to rent.

The leasing place module 1412 is configured in such a manner that pieces of information on places where electric kick scooters that are selectable by the user are transferred to the user terminal 100 and that the user can thus select a place where he/she will receive an electric kick scooter that he/she desires to rent. The place where the electric kick scooter will be received is an agency of the main business operator or any other arbitrary place (a place that is selected by the user from a range of places to which the main business operator can send the electric kick scooter).

The returning place module 1413 is configured in such a manner that information on a place for returning the electric kick scooter, which is selectable by the user, is transferred to the user terminal 100 and that the user can thus select a place to which he/she will return the electric kick scooter after using it. The returning place to which the electric kick scooter will be returned is an agency of the main business operator or any other arbitrary place (a place that is selected by the user from a range of places where the main business operator can pick up the electric kick scooter).

The duration module 1414 is configured in such a manner that information on a duration for which an electric kick scooter that is selectable by the user is lent is transferred to the user terminal 100 and that the user can thus select the duration for which the electric kick scooter is lent.

The rental contract completion module 141c is configured in such a manner that, in a case where the information on the product for leasing an electric kick scooter, which is unassociated with a tourism product, is output by the use-related information selection module 141b to the user terminal 100 and where detailed selection information on the product for leasing an electric kick scooter is then output from the user terminal 100, the contract for leasing the electric kick scooter is completed. The rental contract completion module 141c includes a fee calculation module 1415 that calculates a fee to be charged, according to the detained selection information that is output from the user terminal 100 and transfers fee information to the user terminal 100, a contract storage module 1416 that, in a case where the fee information is transferred by the fee calculation module 1415 to the user terminal 100 and then information indicating that the fee is paid is output from a financial institution's system (not illustrated), completes the contract for leasing the electric kick scooter and stores the detail of the contract in the storage unit 18, a contract transfer module 1417 that, after the detail of the contract is stored in the storage unit 18, transfers the detail of the contract to the user terminal 100, the business operator terminal 200, and the administrator terminal 300, and the like. The financial institution's system means a system that is operated by a financial institution, such as a general bank or a credit card company. The financial institution makes a contract with the administrator of the system and the business operator in order to permit financial transactions that occur due to the contract for leasing the electric kick scooter.

The association module 142 is configured in such a manner that the information that is output from the user terminal 100 is checked and that a contract for leasing the electric kick scooter, which is associated with a tourism product, is thus made. The association module 142 includes an associated product request module 142a, an associated product selection module 142b, a product contract completion module 142c, and the like.

The associated product request module 142a is configured in such a manner that it is checked whether or not the signal that requests the information on the product for leasing an electric kick scooter, which is associated with a tourism product is output in the user terminal 100.

The associated product selection module 142b is configured in such a manner that, in a case where the associated product request module 142a checks that the signal that requests the information on the product for leasing an electric kick scooter, which is associated with a tourism product, is output from the user terminal 100, the information on the product for leasing an electric kick scooter, which is associated with a tourism product, is output from the user terminal 100 and that the user can thus make a selection from among detailed items relating to the product. The associated product selection module 142b includes a tourism product selection module 1421, a kick scooter product selection module 1422, and the like.

The tourism product selection module 1421 is configured in such a manner that information on a tourism product that is selectable by the user is transferred to the user terminal 100 and that the user can thus select the tourism product that he/she desires to use. The tourism product selection module 1421 includes a car rental selection module 1421a that serves to select a rental car product for renting a car, using an electric kick scooter that is loaded in the rented car, and then returning the rented car with the electric kick scooter loaded in the rented car, a lodging house selection module 1421 b that serves to select a lodging product associated with the use of an electric kick scooter, a restaurant selection module 1421c that serves to select a restaurant-using product associated with the use of an electric kick scooter, and the like. For example, in a case where the user selects a product in which the use of a rented car and the use of an electric kick scooter are associated, through the control of the car rental selection module 1421a, when leasing a car, the electric kick scooter is already loaded into a trunk of the rented car. The user takes the electric kick scooter out of the trunk and uses it. The user loads the electric kick scooter back into the trunk after using it. Then, the user returns the rented car along with the electric kick scooter.

The kick scooter product selection module 1422 is configured in such a manner that, in a case where information for selecting a specific tourism product is output from the user terminal 100, the information on the product for leasing an electric kick scooter, which is selectable by the user, is transferred to the user terminal 100 and that the user can thus select the product for leasing an electric kick scooter that he/she desires to rent.

The product contract completion module 142c is configured in such a manner that, in a case where the information on the product for leasing an electric kick scooter, which is associated with a tourism product, is output by the associated product selection module 142b to the user terminal 100 and where pieces of detailed selection information on a tourism product and the product for leasing an electric kick scooter are then output from the user terminal 100, the contract for leasing the electric kick scooter, which is associated with the tourism product, is completed. The product contract completion module 142c includes a fee calculation module 1423 that calculates fees for the tourism product and the product for leasing an electric kick scooter, which are to be charged, according to the detailed selection information that is output from the user terminal 100, and transfers information on the fees to the user terminal 100, an information storage module 1424 that completes the contract for leasing the electric kick scooter, which is associated with the tourism product, in a case where the information on the fees is transferred by the fee calculation module 1423 to the user terminal 100 and where information indicating that the fees are paid is then output from the financial institution's system (not illustrated), and stores the detail of the contract in the storage unit 18, an information transfer module 1425 that, after the detail of the contract is stored in the storage unit 18, transfers the detail of the contract to the user terminal 100, the business operator terminal 200, and the administrator terminal 300, and the like. It is desirable that the fee for the product for leasing an electric kick scooter, which is calculated by the fee calculation module 1423, is smaller than the fee for the product for leasing an electric kick scooter, which is unassociated with the tourism product. The tourism product and the product for leasing an electric kick scooter are associated with each other and thus it is possible that the associated business operator easily sells a tourism product using the present system. In order to sell a tourism product using the present system, the associated business operator has to rent the electric kick scooter. Therefore, the administrator of the present system can easily get a business operator that uses the present system and various products in which a tourism product and the leasing of the electric kick scooter are associated are provided through the present system. As a result, the associated business operator and the administrator can easily secure customers and thus the cost of a product (service) can be lowered. Thus, the user can make a selection from among various products and can use a product at a low price.

The unlimited pass module 143 is configured in such a manner that the information that is output from the user terminal 100 is checked and that a contract for purchasing an unlimited pass that permits an electric kick scooter to be continually used any number of times for a fixed duration is thus made. The unlimited pass module 143 includes an exclusive unlimited pass module 143a, an associated unlimited pass module 143b, and the like.

The exclusive unlimited pass module 143a is configured in such a manner that the contract for purchasing the unlimited pass that permits an electric kick scooter to be continually used any number of times for a fixed duration in a manner that is unassociated with a tourism product is made. In a case where a signal that requests information on the unlimited pass is output from the user terminal 100, the exclusive unlimited pass module 143a outputs the information on the unlimited pass to the user terminal 100. In a case where selection information on the unlimited pass is output from the user terminal 100, the exclusive unlimited pass module 143a completes the contract for purchasing the unlimited pass. For example, an exclusive unlimited pass A that permits the use of an electric kick scooter for two days, an exclusive unlimited pass B that permits an electric kick scooter to be used for one week, and an exclusive unlimited pass C that permits the use of an electric kick scooter for one month can be sold through the system described above. In a case where the user purchases the exclusive unlimited pass B, he/she can use at any time an electric kick scooter for one week.

The associated unlimited pass module 143b is configured in such a manner that a contract for a preset associated unlimited pass that permits both of a specific tourism product and an electric kick scooter to be used for a fixed duration is made. In a case where a signal that requests information on the associated unlimited pass is output from the user terminal 100, the associated unlimited pass module 143b outputs the information on the associated unlimited pass to the user terminal 100. In a case where selection information on the associated unlimited pass is output from the user terminal 100, the associated unlimited pass module 143b completes a contract for purchasing an associated unlimited pass. For example, an associated unlimited pass A that permits the use of a rented car and an electric kick scooter for two days, an associated unlimited pass B that permits a lodging house, a rented car, and an electric kick scooter to be used for four days, and an associated unlimited pass C that permits a lodging house and an electric kick scooter to be used for three days can be sold through the system described above. In a case where the user purchases the associated unlimited pass A, he/she can use at any time a rented car and an electric kick scooter for two days.

The kick scooter request unit 15 is configured in such a manner, in a case where information indicating that an electric kick scooter is received in an arbitrary place, as a place for receiving the electric kick scooter, instead of an agency of the main business operator, is included in the detail of the contract for leasing the electric kick scooter, which is made through the non-association module 141, the main business operators exchange information with the business operator terminal 200 and that the electric kick scooter is thus transferred to the arbitrary place. The kick scooter request unit 15 includes a reception place checking module 151, a transfer request module 152, a transfer requirement module 153, and the like.

The reception place checking module 151 is configured in such a manner that the detail of the contract that is stored in the storage unit 18 is checked and that it is checked whether or not information indicating that the electric kick scooter is received in an arbitrary place, as the place for receiving the electric kick scooter, instead of an agency of the main business operator, is included in the detail of the contract for leasing the electric kick scooter, which is made through the non-association module 141.

In a case where the reception place checking module 151 checks that the information indicating that the electric kick scooter is received in an arbitrary place, as the place for receiving an electric kick scooter, instead of the agency of the main business operator, is included, the transfer request module 152 outputs information requesting that the electric kick scooter is transferred to a specific arbitrary place at a specific date, to business operator terminals 200 of multiple main business operators. In a case where information indicating that the electric kick scooter is transferred to the specific arbitrary place at the specific date is output in the business operator terminal 200 within a fixed time, the transfer request module 152 selects a business operator that owns business operator terminal 200 in which the information is output, as a transfer business operator, stores such a business operator, in the storage unit 18, and outputs information indicating that such a business operator is selected as a transfer business operator, to the business operator terminal 200. In a case where information indicating that the electric kick scooter is transferred to the specific place at the specific date is output in multiple business operator terminals 200 within the fixed time, a business operator that owns the business operator terminal 200 in which the information is output earliest is selected as the transfer business operator.

Although the information requesting that the electric kick scooter is transferred to a specific arbitrary place at a specific date is output in business operator terminals 200 of multiple main business operators, in a case where the information indicating that the electric kick scooter is transferred to the specific place at the specific date is not output in the business operator terminal 200 within a fixed time, the transfer requirement module 153 identifies a main business operator that has an agency that is located closest to the arbitrary place, selects the main business as the transfer business operator, stores the main business in the storage unit 18, and outputs information indicating that the main business is selected as the transfer business operator, to the business operator terminal 200. In a case where the user desires to receive an electric kick scooter in a place other than the agency, multiple main business operators are alerted to the information, as described above, without requesting a main business operator having an agency located closest to the place to transfer the electric kick scooter, and the electric kick scooter is transferred by a main business operator that desires to transfer the electric kick scooter. Thus, the electric kick scooter is smoothly transferred in a manner that is suitable for a situation of the main business operator, and a main business operator that outputs earliest the information indicating that the electric kick scooter can be transferred is permitted to transfer the electric kick scooter. In this manner, a competition system is introduced and thus, the use of the system is encouraged actively. In a case where a main business operator that desires to transfer the electric kick scooter is not present within a fixed duration, a main business operator that has an agency located closest to the place described above is required to transfer the electric kick scooter. Thus, a case where the user cannot use an electric kick scooter does not occur.

The return processing unit 16 is configured in such a manner that, in a case where information indicating that the electric kick scooter is returned to an arbitrary place, as the place for returning an electric kick scooter, instead of the agency of the main business operator and the place where the associated business operator provides the tourism product, is included in the detail of the contract for leasing the electric kick scooter, which is made through the contract unit 14, information is exchanged between the business operator terminal 200 and administrator terminal 300 and that an electric kick scooter located at the arbitrary place is thus picked up. The return processing unit 16 includes a returning place checking module 161, a business operator providing module 162, an administrator providing module 163, and the like.

The returning place checking module 161 is configured in such a manner that, in a case where the detail of the contract that is stored in the storage unit 18 is checked and where it is checked that the information indicating that the electric kick scooter is returned to an arbitrary place, as the place for returning an electric kick scooter, instead of the agency of the main business operator and the place where the associated business operator provides the tourism product, is included in the detail of the contract for leasing the electric kick scooter, which is made through the contract unit 14, it is determined whether the contract for leasing the electric kick scooter is made through the non-association module 141 or the association module 142.

In a case where the returning place checking module 161 determines that the contract for leasing the electric kick scooter is made through the non-association module 141, the business operator providing module 162 outputs information indicating that the electric kick scooter is picked up in a specific place at a specific date, to the business operator terminal 200 of the main business operator that owns the electric kick scooter that is a target for the contract.

In a case where the returning place checking module 161 determines that the contract for leasing the electric kick scooter is made through the association module 142, the administrator providing module 163 outputs information indicating that the electric kick scooter is picked up in a specific place at a specific date and then is transferred to a specific associated business operator, to the administrator terminal 300 of the administrator of the system described above. The main business operator retains the moving apparatus that carries electric kick scooters, but the associated business operator leases an electric kick scooter in addition to the selling of a tourism product. Because of this, the associated business operator does not retain the moving apparatus separately. Therefore, the administrator picks up an electric kick scooter, and transfers the electric kick scooter to the associated business operator.

The tour contract unit 17 is configured in such a manner that information that is output from the user terminal 100 of a foreign tourist is checked and that a contract for an electric kick scooter tour is thus made. The contract for an electric kick scooter tour means a package product for sightseeing a tourist attraction site while riding on an electric kick scooter. This product includes guide's explanation, tourist's riding on an electric kick scooter, riding in a shuttle bus, safety guard's guidance, safety personnel's safeguard, transferring an electric kick scooter through the use of a moving apparatus, and the like.

Setting information necessary for operating the system described above and information that is generated while operating the system described above are stored in the storage unit 18. The control unit 19 controls overall operation of the management server 1 and performs control in such a manner that the information processing application described above is installed.

Various embodiments of the present invention are described above, and the various embodiments are only examples in which the technical idea of the present invention is implemented. Any modification or alteration example should be interpreted as falling within the scope of the present invention, as long as the technical idea of the present invention is implemented.

## Claims

1. A tourism-associated electric kick scooter rental system comprising:
- a user terminal; and
- a management server that exchanges information with the user terminal and serves to make a contract for leasing an electric kick scooter,
wherein the management server includes a contract unit comprising an association module for checking information that is output from the user terminal and for serving to make the contract for leasing the electric kick scooter in a manner that is associated with a tourism product.

2. The tourism-associated electric kick scooter rental system according to claim 1,
wherein the association module includes a car rental selection module that serves to select a rental car product in which a car is rented, the electric kick scooter loaded in the rented car is used, and the rented car is returned with the electric kick scooter loaded in the rented car after the electric kick scooter is used.

3. The tourism-associated electric kick scooter rental system according to claim 1,
wherein the contract unit further comprises:
- an exclusive unlimited pass module that serves to make a contract for purchasing an exclusive unlimited pass that permits the electric kick scooter to be used continually any number of times for a fixed duration in a manner that is unassociated with the tourism product, and
- an associated unlimited pass module that serves to make a contract for purchasing a preset associated unlimited pass that permits both of a specific tourism product and the electric kick scooter to be used for a fixed duration.

4. The tourism-associated electric kick scooter rental system according to claim 1,
wherein the management server further includes a tour contract unit that checks information that is output from a user terminal of a foreign tourist and serves to make a contract for an electric kick scooter tour, wherein the electric kick scooter tour means a tourism package product for sightseeing a tourist attraction site while riding on the electric kick scooter.

5. The tourism-associated electric kick scooter rental system according to claim 1,
wherein:
- the contract unit further includes a non-association module that checks information that is output from the user terminal and serves to make a contract for leasing the electric kick scooter in a manner that is unassociated with the tourism product;
- the non-association module includes a use-related information selection module that serves to output information on a product for leasing the electric kick scooter, which is unassociated with the tourism product, to the user terminal and serves to enable a user to make a selection from among detailed items relating to the product for leasing the electric kick scooter, which is unassociated with the tourism product, in a case where a signal that requests information on the product for leasing the electric kick scooter, which is unassociated with the tourism product, is output from the user terminal;
- the use-related information selection module comprises: a leasing place module that serves to transfer information on a place for receiving the electric kick scooter, which is selectable by a user, to the user terminal, and serves to enable the user to select the place for receiving the electric kick scooter that is selected by the user; and a returning place module that serves to transfer information on a place for returning the electric kick scooter, which is selectable by the user, to the user terminal, and serves to enable the user to select the place for returning the electric kick scooter after using the electric kick scooter; and
- the place for receiving the electric kick scooter is an agency of a main business operator or any other arbitrary place that is selected by the user.

6. The tourism-associated electric kick scooter rental system according to claim 5,
wherein the management server further includes a kick scooter request unit that serves to exchange information with a business operator terminal of the main business operator and serves to transfer the electric kick scooter to an arbitrary place, in a case where information indicating that the electric kick scooter is received in the arbitrary place, as the place for receiving the electric kick scooter, instead of the agency of the main business operator, is included in the detail of the contract for leasing the electric kick scooter, which is made through the non-association module,
wherein the kick scooter request unit comprises:
- a reception place checking module that checks whether or not the information indicating that the electric kick scooter is received in the arbitrary place, as the place for receiving the electric kick scooter, instead of the agency of the main business operator, is included in the detail of the contract for leasing the electric kick scooter, which is made through the non-association module; and
- a transfer request module that, in a case where the reception place checking module checks that the information indicating that the electric kick scooter is received in the arbitrary place, as the place for receiving the electric kick scooter, instead of the agency of the main business operator, is included, outputs information requesting that the electric kick scooter is transferred to a specific arbitrary place at a specific date, to business operator terminals of multiple main business operators, and in a case where information indicating that the electric kick scooter is transferred to the specific arbitrary place at the specific date is output in the business operator terminal within a fixed time, selects an operator that owns the business operator terminal in which the formation is output, as a transfer business operator; and
- when the information indicating that the electric kick scooter is transferred at the specific arbitrary place at the specific date is output in multiple business operator terminals with the fixed time, the transfer request module selects a business operator that owns the business operator terminal in which the information is output earliest, as the transfer business operator.

7. The tourism-associated electric kick scooter rental system according to claim 6,
wherein the kick scooter request unit further includes a transfer requirement module that identifies a main business operator that owns an agency that is located closest to the arbitrary place, and selects the main business operator as the transfer business operator, in a case where the information indicating that the electric kick scooter is transferred to the specific arbitrary place at the specific date is not output in the business operator terminal within the fixed time, although the transfer request module outputs the information requesting that the electric kick scooter is transferred to the specific arbitrary place at the specific date, to the business operator terminals of the multiple main business operators.

8. The tourism-associated electric kick scooter rental system according to claim 5,
wherein the management server further comprises a return processing unit that serves to exchange information with a business operator terminal and a management terminal and serves to enable the electric kick scooter, which is positioned in the arbitrary place, to be picked up, in a case where information indicating that the electric kick scooter is returned to an arbitrary place, as a place for returning the electric kick scooter, that is selected by the user, instead of the agency of the main business operator and a place where an associated business operator provides the tourism product, is included in the detail of the contract for leasing the electric kick scooter, which is made through the contract unit, and
wherein the return processing unit comprises:
- a returning place checking module that determines whether the contract for the electric kick scooter is made through the non-association module or the association module, in a case where the information indicating that the electric kick scooter is returned to the arbitrary place, as the place for returning the electric kick scooter, instead of the agency of the main business operator and the place where the associated business operator provides the tourism product, is included in the detail of the contract for leasing the electric kick scooter, which is made through the contract unit;
- a business operator providing module that outputs information indicating that the electric kick scooter is picked up in a specific place at a specific date, in the business operator terminal of the main business operator that owns the electric kick scooter that is a target for the contract, in a case where the returning place checking module determines that the contract for the electric kick scooter is made through the non-association module; and
- an administrator providing module that outputs information indicating that the electric kick scooter is picked up in a specific place at a specific date and then is transferred to a specific associated business operator, in the administrator terminal, in a case where the returning place checking module determines that the contract for the electric kick scooter is made through the association module.
